# EUROPEAN PATENT APPLICATION

(11) **EP 4 502 088 A1**
(43) Date of publication of application: **05.02.2025**
(21) Application number: 23774524.5
(22) Date of filing: 08.03.2023
(51) Int. Cl.: C09D 175/04, C08G 18/00, C08G 18/08, C08G 18/44, C08G 18/65, C09D 5/02

(54) **POLYURETHANE RESIN COMPOSITION, POLYURETHANE RESIN AQUEOUS DISPERSION, COATING AGENT FOR FILM, AND FILM**

(30) Priority: 24.03.2022 JP 2022048950
(71) Applicant: DKS Co. Ltd., Kyoto-shi, Kyoto 600-8873 (JP)
(72) Inventor: NISHIMURA, Takuma, kyoto-shi, Kyoto 600-8873 (JP); MURAKAMI, Hiroki, kyoto-shi, Kyoto 600-8873 (JP); HIROSE, Masaharu, kyoto-shi, Kyoto 600-8873 (JP)
(74) Representative: TBK
(86) International application number: PCT/JP2023/008692
(87) International publication number: WO 2023/181925

(57) **Abstract**

Provided is a polyurethane resin composition capable of forming a coating that has high mechanical strength and solvent resistance and that also has scratch resistance and blocking resistance.

In a composition containing a polyurethane resin, the polyurethane resin has a structural unit derived from a polyol, a structural unit derived from a polyisocyanate, and a structural unit derived from a polyamine, and the polyol includes a polycarbonate polyol having a structural unit derived from 1,10-decanediol, a polyol compound having an anionic hydrophilic group, a glycol compound represented by HO-(R¹-O)ₙ-H, and a polyhydric alcohol having three or more hydroxy groups. The glycol compound has a number-average molecular weight of 500 to 2,500, the polyhydric alcohol is included in an amount of 10% by mass or less relative to a total mass of the polyol, and the glycol compound is included in an amount of 30% by mass or more and 90% by mass or less relative to the total mass of the polyol.

## Description

### Technical Field

The present invention relates to a polyurethane resin composition, a polyurethane resin aqueous dispersion, a coating agent for a film, and a coating.

### Background Art

Aqueous polyurethane resins are used in a wide range of fields such as aqueous coating agents and adhesives because they can form coatings having good mechanical properties, solvent resistance, and water resistance. From this viewpoint, polyurethane resin compositions having improved dispersibility and polyurethane resin compositions capable of causing coatings to exhibit various functions when the compositions are used as coating agents are being actively developed.

For example, PTL 1 discloses a technique with which a coating having good adhesiveness and solvent resistance can be formed using an aqueous resin dispersion that contains an aqueous polyol in which a surfactant and a polyol are dispersed in an aqueous medium, and a polyisocyanate.

### Citation List

### Patent Literature

PTL 1: Japanese Unexamined Patent Application Publication No. 2019-85560

### Summary of Invention

### Technical Problem

However, when a coating is formed on a film using an existing polyurethane resin composition as a coating agent, the coating may have insufficient scratch resistance and blocking resistance, and thus there is still room for improvement. In particular, a coating agent for a film is required to form a coating that has high mechanical strength and solvent resistance and is also strongly required to be capable of forming a coating that also has scratch resistance and blocking resistance.

The present invention has been made in view of the above, and an object of the present invention is to provide a polyurethane resin composition capable of forming a coating that has high mechanical strength and solvent resistance and that also has good scratch resistance and blocking resistance and a polyurethane resin aqueous dispersion containing the polyurethane resin composition. Another object of the present invention is to provide a coating agent for a film, the coating agent containing the polyurethane resin aqueous dispersion, and a coating formed from the coating agent.

### Solution to Problem

The inventors of the present invention have conducted extensive studies to achieve the above objects and consequently found that the objects can be achieved by introducing a structural unit derived from a specific polyol into a polyurethane resin. This finding has led to the completion of the present invention.

Specifically, the present invention includes, for example, subject matters described in items below.

### Item 1

A polyurethane resin composition, the composition containing a polyurethane resin,
wherein the polyurethane resin has a structural unit derived from a polyol, a structural unit derived from a polyisocyanate, and a structural unit derived from a polyamine,
the polyol includes:
   a polycarbonate polyol having a structural unit derived from 1,10-decanediol,
   a polyol compound having an anionic hydrophilic group,
   a glycol compound represented by HO-(R¹-O)ₙ-H (where R¹ represents an alkylene group having 3 to 5 carbon atoms, and n represents a number of 1 or more), and
   a polyhydric alcohol having three or more hydroxy groups,
   the glycol compound has a number-average molecular weight of 500 to 2,500,
   the polyhydric alcohol is included in an amount of 10% by mass or less relative to a total mass of the polyol, and
   the glycol compound is included in an amount of 30% by mass or more and 90% by mass or less relative to the total mass of the polyol.

### Item 2

The polyurethane resin composition according to item 1, wherein the polyurethane resin has an acid value of 5 to 35 mgKOH/g.

### Item 3

The polyurethane resin composition according to item 1 or 2, wherein the polyhydric alcohol has a molecular weight of 420 to 2,000.

### Item 4

A polyurethane resin aqueous dispersion containing the polyurethane resin composition according to any one of items 1 to 3.

### Item 5

A coating agent for a film, the coating agent containing the polyurethane resin aqueous dispersion according to item 4.

### Item 6

The coating agent according to item 5, being a coating agent for a decorative film.

### Item 7

A coating including a dried product of the polyurethane resin aqueous dispersion according to item 4.

### Advantageous Effects of Invention

The polyurethane resin composition according to the present invention is capable of forming a coating that has high mechanical strength and solvent resistance and that also has good scratch resistance and blocking resistance, for example, when the polyurethane resin composition is made into an aqueous dispersion.

### Description of Embodiments

Embodiments of the present invention will be described in detail below. The expressions "contain" and "include" as used herein encompass the concepts of "contain", "include", "consist essentially of", and "consist only of".

### 1. Polyurethane resin composition

A polyurethane resin composition according to the present invention contains a polyurethane resin. The polyurethane resin has a structural unit derived from a polyol, a structural unit derived from a polyisocyanate, and a structural unit derived from a polyamine.

In the polyurethane resin composition, the polyol includes:
(a) a polycarbonate polyol having a structural unit derived from 1,10-decanediol,
(b) a polyol compound having an anionic hydrophilic group,
(c) a glycol compound represented by HO-(R¹-O)ₙ-H (where R¹ represents an alkylene group having 3 to 5 carbon atoms, and n represents a number of 1 or more), and
(d) a polyhydric alcohol having three or more hydroxy groups.

Hereinafter, the polyol including the (a), the (b), the (c), and the (d) is referred to as "polyol A".

In the polyurethane resin composition, the glycol compound has a number-average molecular weight of 500 to 2,500, the polyhydric alcohol is included in an amount of 10% by mass or less relative to a total mass of the polyol (A), and the glycol compound is included in an amount of 30% by mass or more and 90% by mass or less relative to the total mass of the polyol (A).

The polyurethane resin composition according to the present invention is capable of forming a coating that has high mechanical strength and solvent resistance and that also has good scratch resistance and blocking resistance, for example, when the polyurethane resin composition is made into an aqueous dispersion. Accordingly, the polyurethane resin composition according to the present invention can be suitably used as an aqueous dispersion, and such an aqueous dispersion is particularly suitable as a coating agent.

### (Polyol (A))

The polyurethane resin contained in the polyurethane resin composition has a structural unit derived from a polyol. As described above, the polyol for forming the structural unit (polyol (A)) includes (a) a polycarbonate polyol having a structural unit derived from 1,10-decanediol, (b) a polyol compound having an anionic hydrophilic group, (c) a glycol compound represented by HO-(R¹-O)ₙ-H (where R¹ represents an alkylene group having 3 to 5 carbon atoms), and (d) a polyhydric alcohol having three or more hydroxy groups.

The (a) polycarbonate polyol having a structural unit derived from 1,10-decanediol (hereinafter, may be simply abbreviated as component (a)) is more specifically a compound having a structural unit derived from a glycol compound including 1,10-decanediol and a -OCOO- bond.

The component (a) is, for example, a polycarbonate diol having a structural unit derived from a glycol compound including 1,10-decanediol. The glycol compound including 1,10-decanediol may include, besides 1,10-decanediol, for example, aliphatic diol compounds having 1 to 8 carbon atoms, such as ethylene glycol, diethylene glycol, 1,4-butanediol, 1,3-butanediol, 2,3-butanediol, 1,3-propylene glycol, 1,2-propylene glycol, 1,6-hexanediol, 3-methyl-1,5-pentanediol, and neopentyl glycol. The glycol compound including 1,10-decanediol can include 1,10-decanediol in an amount of 5% by mole or more (preferably 15% by mole or more, more preferably 25% by mole or more). When the glycol compound including 1,10-decanediol includes one or more glycols other than 1,10-decanediol, such glycols may be used alone or in combination of two or more thereof.

The number-average molecular weight of the component (a) is not particularly limited and is, for example, preferably 500 or more, more preferably 900 or more, still more preferably 950 or more, and preferably 3,400 or less, more preferably 3,200 or less, still more preferably 3,100 or less.

When the component (a) has a structural unit derived from a glycol compound including 1,10-decanediol (C10) and a butanediol compound (C4), for example, the proportion of 1,10-decanediol relative to the total amount of 1,10-decanediol and the butanediol compound is preferably 5% by mole or more, more preferably 15% by mole or more, still more preferably 25% by mole or more.

The component (a) can be obtained by a known production method or can be obtained as a commercially available product. Examples of commercially available products of the component (a) include polycarbonate diol "BENEBiOL" (registered trademark) series (NL1010DB, NL1030DB, NL2010DB, NL3010DB, etc.) manufactured by Mitsubishi Chemical Corporation.

The component (a) included in the polyol (A) may be a single type of component or a combination of two or more types of components.

In the (b) polyol compound having an anionic hydrophilic group (hereinafter, may be simply abbreviated as component (b)), the type of anionic hydrophilic group is not particularly limited, and, for example, various anionic hydrophilic groups introduced for producing known polyurethane resin aqueous dispersions may be used. Specific examples of anionic hydrophilic groups include a carboxyl group and a salt thereof, and a sulfonic group and a salt thereof.

The component (b) may have one or more active hydrogen groups besides the anionic hydrophilic group. Specifically, the component (b) may be, for example, a compound containing one or more active hydrogen groups and one or more carboxy groups (or salts thereof) or a compound having one or more active hydrogen groups and one or more sulfonic groups (or salts thereof). The "active hydrogen group" means a group that can be subjected to a condensation reaction, such as a hydroxy group, an amino group, or a carboxyl group. However, when the anionic hydrophilic group is a carboxyl group, the active hydrogen group is a group other than a carboxyl group.

Examples of compounds containing one or more active hydrogen groups and one or more carboxy groups (or salts thereof) include carboxylic acid-containing compounds such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, derivatives thereof, salts thereof, and, in addition, polyester polyols obtained using carboxylic acid-containing compounds. Examples of compounds containing one or more active hydrogen groups and one or more carboxy groups (or salts thereof) further include amino acids such as alanine, aminobutyric acid, aminocaproic acid, glycine, glutamic acid, aspartic acid, and histidine; and carboxylic acids such as succinic acid, adipic acid, maleic anhydride, phthalic acid, and trimellitic anhydride.

Examples of compounds having one or more active hydrogen groups and one or more sulfonic groups (or salts thereof) include sulfonic acid-containing compounds such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid; derivatives thereof; and polyester polyols, polyamide polyols, and polyamide polyester polyols obtained by copolymerizing two or more of the foregoing sulfonic acid-containing compounds.

The component (b) is preferably a polyol compound having a carboxy group, more preferably 2,2-dimethylolpropionic acid from the viewpoint of improving storage stability of the polyurethane aqueous dispersion.

The compound containing one or more active hydrogen groups and one or more carboxy groups (or salts thereof) and the compound having one or more active hydrogen groups and one or more sulfonic groups (or salts thereof) may each be a salt in which the carboxy groups or the sulfonic groups are neutralized with a neutralizing agent. This achieves good dispersibility of the polyurethane resin in water. Examples of neutralizing agents include nonvolatile bases such as sodium hydroxide and potassium hydroxide; tertiary amines such as trimethylamine, triethylamine, dimethylethanolamine, methyldiethanolamine, and triethanolamine; and volatile bases such as ammonia. The neutralization may be performed before urethane prepolymer-forming reaction described later, during the reaction, or after the reaction.

The component (b) can be obtained by a known production method or can be obtained as a commercially available product.

The component (b) included in the polyol (A) may be a single type of component or a combination of two or more types of components.

In the (c) glycol compound represented by HO-(R¹-O)ₙ-H (hereinafter, may be simply abbreviated as "component (c)" or "glycol compound"), R¹ represents an alkylene group having 3 to 5 carbon atoms, and n represents a number of 1 or more.

In the component (c), R¹ is preferably an alkylene group having 4 carbon atoms. That is, the component (c) is preferably polytetramethylene ether glycol (PTMG) represented by the following formula:

HO- (CH₂CH₂CH₂CH₂O)ₙ-H

In this case, the polyurethane resin composition is likely to form a coating that has higher mechanical strength and solvent resistance and that also has better scratch resistance and blocking resistance when the polyurethane resin composition is made into an aqueous dispersion.

In the component (c), n is preferably 5 to 55, more preferably 6 to 45.

The glycol compound (component (c)) has a number-average molecular weight of 500 to 2,500 (500 or more and 2,500 or less). If the molecular weight of the glycol compound is less than 500 or exceeds 2,500, the mechanical strength of a coating formed using the polyurethane resin composition tends to decrease, and scratch resistance and blocking resistance are also poor. The number-average molecular weight of the glycol compound (component (c)) is preferably 800 to 2,500, more preferably 1,000 to 2,000.

The component (c) can be obtained by a known production method or can be obtained as a commercially available product.

The component (c) included in the polyol (A) may be a single type of component or a combination of two or more types of components.

The (d) polyhydric alcohol having three or more hydroxy groups (hereinafter, may be simply abbreviated as component (d)) is a compound other than the component (a), the component (b), and the component (c). Preferably, the component (d) has no anionic hydrophilic group.

Examples of the component (d) include, but are not particularly limited to, polyether polyols, polyester polyols, trimethylolpropane, glycerin, and pentaerythritol. From the viewpoint of easily forming a coating that has higher mechanical strength and solvent resistance and that also has better scratch resistance and blocking resistance, the component (d) is preferably one or more selected from the group consisting of polyether polyols and trimethylolpropane.

In the component (d), the upper limit of the number of hydroxy groups is not particularly limited and is, for example, preferably 8 or less, more preferably 7 or less, still more preferably 6 or less.

The molecular weight of the component (d) (polyhydric alcohol) is not particularly limited. From the viewpoint of easily forming a coating that has higher mechanical strength and solvent resistance and that also has better scratch resistance and blocking resistance, the molecular weight of the component (d) (polyhydric alcohol) is preferably 100 to 5,000, more preferably 200 to 3,000, still more preferably 300 to 2,500. From the viewpoint of easily forming a coating that has particularly high mechanical strength and solvent resistance and that also has particularly good scratch resistance and blocking resistance, the molecular weight of the component (d) (polyhydric alcohol) is particularly preferably 420 to 2,000. Accordingly, the component (d) particularly preferably includes a polyhydric alcohol compound having a molecular weight of 420 to 2,000.

The component (d) can be obtained by a known production method or can be obtained as a commercially available product. Examples of commercially available products of the component (d) include polyether polyols such as "SANNIX GP-600" manufactured by Sanyo Chemical Industries, Ltd., "EXCENOL 430", "EXCENOL 1030", "EXCENOL 410NE", and "EXCENOL 3030" manufactured by AGC Inc.

The component (d) included in the polyol (A) may be a single type of component or a combination of two or more types of components.

The polyol (A) can include a polyol compound other than the component (a), the component (b), the component (c), and the component (d). Alternatively, the polyol (A) may consist only of the component (a), the component (b), the component (c), and the component (d).

The proportion of the component (c) (the glycol compound) in the polyol (A) is 30% by mass or more and 90% by mass or less relative to the total mass of the polyol (A). If the proportion of the component (c) is less than 30% by mass or exceeds 90% by mass relative to the total mass of the polyol (A), the mechanical strength of a coating formed using the polyurethane resin composition tends to decrease, and scratch resistance and blocking resistance are also poor. The proportion of the component (c) is preferably 35% by mass or more, more preferably 40% by mass or more, still more preferably 45% by mass or more and is preferably 85% by mass or less, more preferably 80% by mass or less, still more preferably 70% by mass or less relative to the total mass of the polyol (A).

The proportion of the component (d) (the polyhydric alcohol) in the polyol (A) is 10% by mass or less relative to the total mass of the polyol (A). If the proportion of the component (d) exceeds 10% by mass relative to the total mass of the polyol (A), the mechanical strength of a coating formed using the polyurethane resin composition tends to decrease, and scratch resistance and blocking resistance are also poor. The proportion of the component (d) is preferably 0.1% by mass or more, more preferably 0.5% by mass or more, particularly preferably 1% by mass or more relative to the total mass of the polyol (A). The proportion of the component (d) is preferably 9.5% by mass or less, more preferably 9% by mass or less relative to the total mass of the polyol (A).

The proportion of the component (a) is not particularly limited. For example, the proportion of the component (a) is more preferably 3% to 50% by mass, more preferably 4% to 45% by mass relative to the sum of the total mass of the polyol (A) and the mass of a polyisocyanate described later.

The proportion of the component (b) is not particularly limited. For example, the proportion of the component (b) is more preferably 2% to 8% by mass, more preferably 3% to 7% by mass relative to the sum of the total mass of the polyol (A) and the mass of a polyisocyanate described later.

### (Polyisocyanate)

The polyurethane resin contained in the polyurethane resin composition has a structural unit derived from a polyisocyanate. Examples of the polyisocyanate include, but are not particularly limited to, various polyisocyanate compounds used for forming polyurethane resins. For example, the polyisocyanate may be a compound having two or more isocyanate groups.

Specifically, examples of the polyisocyanate include bifunctional isocyanate compounds such as aliphatic diisocyanates, alicyclic diisocyanates, aromatic diisocyanates, and araliphatic diisocyanates.

Examples of aliphatic polyisocyanates include tetramethylene diisocyanate, dodecamethylene diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate.

Examples of alicyclic polyisocyanates include isophorone diisocyanate (hereinafter, may be denoted by "IPDI"), hydrogenated xylylene diisocyanate, 4,4'-dicyclohexylmethane diisocyanate (hereinafter, may be denoted by "H12MDI"), 1,4-cyclohexane diisocyanate, methylcyclohexylene diisocyanate, and 1,3-bis(isocyanatomethyl)cyclohexane.

Examples of aromatic polyisocyanates include tolylene diisocyanate, 2,2'-diphenylmethane diisocyanate, 2,4'-diphenylmethane diisocyanate, 4,4'-diphenylmethane diisocyanate, polymethylene polyphenyl polyisocyanate, 4,4'-dibenzyl diisocyanate, 1,5-naphthylene diisocyanate, xylylene diisocyanate, 1,3-phenylene diisocyanate, and 1,4-phenylene diisocyanate.

Examples of araliphatic polyisocyanates include dialkyldiphenylmethane diisocyanate, tetraalkyldiphenylmethane diisocyanate, and α,α,α,α-tetramethylxylylene diisocyanate.

The polyisocyanates used may be modified products of the above organic polyisocyanates. Examples of modified products of organic polyisocyanates include, but are not particularly limited to, carbodiimides, allophanates, biurets, isocyanurates, and adducts. These polyisocyanates may be used alone or in combination of two or more thereof.

The number-average molecular weight of the polyisocyanate is not particularly limited but is preferably 100 or more and 400 or less, more preferably 120 or more and 300 or less, more preferably 150 or more and 280 or less.

The polyisocyanate is preferably 4,4'-dicyclohexylmethane diisocyanate (H12MDI) and/or isophorone diisocyanate (IPDI). In this case, the polyurethane resin composition easily forms a coating that has higher mechanical strength and solvent resistance and that also has better scratch resistance and blocking resistance.

The polyisocyanate can be obtained by a known production method or can be obtained as a commercially available product. The polyisocyanate may be a single type of polyisocyanate or may include two or more types of polyisocyanates.

### (Polyamine)

The polyurethane resin contained in the polyurethane resin composition has a structural unit derived from a polyamine. The structural unit derived from a polyamine comes from, for example, a chain extender used in the production of the polyurethane resin described later.

Examples of the polyamine (chain extender) include diamine compounds and polyamine compounds (compounds having three or more amino groups). Examples of diamine compounds include ethylenediamine, trimethylenediamine, piperazine, isophoronediamine, and amino group-containing silane coupling agents. Examples of polyamine compounds include diethylenetriamine, dipropylenetriamine, and triethylenetetramine.

### (Polyurethane resin)

The polyurethane resin contained in the polyurethane resin composition can include, in addition to a structural unit derived from a polyol, a structural unit derived from a polyisocyanate, and a structural unit derived from a polyamine, other structural units as long as the effects of the present invention are not impaired. The polyurethane resin can be formed only of a structural unit derived from a polyol, a structural unit derived from a polyisocyanate, and a structural unit derived from a polyamine.

Examples of the other structural units include structural units derived from chain extenders other than polyamines and crosslinking agents. Examples of chain extenders other than polyamines include ethylene glycol, diethylene glycol, 1,4-butanediol, 1,3-butanediol, 2,3-butanediol, 1,3-propylene glycol, 1,2-propylene glycol, 1,6-hexanediol, 3-methyl-1,5-pentanediol, and neopentyl glycol. Examples of crosslinking agents include aminoplast compounds, epoxy compounds, carbodiimide compounds, and glycerin.

In the polyurethane resin, the proportion of each structural unit is not particularly limited. For example, the polyurethane resin preferably contains a structural unit derived from the polyisocyanate in an amount of 10 to 50 parts by mass, more preferably 20 to 40 parts by mass relative to 100 parts by mass of the total mass of the structural unit derived from the polyol and the structural unit derived from the polyisocyanate. The polyurethane resin preferably contains a structural unit derived from the polyamine in an amount of 0.1 to 8 parts by mass, more preferably 0.1 to 5 parts by mass, still more preferably 0.5 to 3 parts by mass relative to 100 parts by mass of the total mass of the structural unit derived from the polyol and the structural unit derived from the polyisocyanate.

The polyurethane resin preferably has an acid value of 5 to 35 mgKOH/g. In this case, the polyurethane resin composition is likely to form a coating that has higher mechanical strength and solvent resistance and that also has better scratch resistance and blocking resistance when the polyurethane resin composition is made into an aqueous dispersion. The polyurethane resin more preferably has an acid value of 10 to 30 mgKOH/g.

The acid value of the polyurethane resin composition can be measured in accordance with JIS K0070-1992.

The number-average molecular weight of the polyurethane resin is not particularly limited and is, for example, preferably 5,000 to 500,000, more preferably 10,000 to 300,000. The number-average molecular weight of the polyurethane resin is measured with a GPC apparatus using tetrahydrofuran (THF) as a solvent and is determined as a polystyrene-equivalent value. Specific measurement conditions are as follows.
Column: Polystyrene gel columns manufactured by Tosoh Corporation (TSK gel G4000HXL + TSK gel G3000HXL + TSK gel G2000HXL + TSK gel G1000HXL two columns are connected in series in this order)
Column temperature: 40°C
Detector: Differential refractive index detector (RID-6A, manufactured by Shimadzu Corporation)
Flow rate: 1 mL/min

That is, in the present invention, the number-average molecular weight of the polyurethane resin is defined by the above measurement method and, in particular, means a number-average molecular weight of a polyurethane resin which is a solvent-soluble component.

Tg (tanδ) of the polyurethane resin is not particularly limited, can be, for example, -10°C or higher and 80°C or lower, and is preferably 0°C or higher and 70°C or lower, more preferably 10°C or higher and 60°C or lower, still more preferably 15°C or higher and 55°C or lower.

The method for producing the polyurethane resin is not particularly limited, and, for example, a known production method can be widely employed. In particular, the polyurethane resin is preferably produced by a production method using emulsification and dispersion described later.

### (Polyurethane resin composition)

The polyurethane resin composition according to the present invention contains the polyurethane resin described above. The polyurethane resin composition can contain a component other than the polyurethane resin as long as the effects of the present invention are not impaired. The method for preparing the polyurethane resin composition is not particularly limited, and, for example, a known method can be widely employed.

The polyurethane resin composition according to the present invention can be made into, for example, an aqueous dispersion. Such a polyurethane resin aqueous dispersion contains the polyurethane resin composition as a solid component and contains an aqueous solvent as a medium. For example, when the polyurethane resin is produced by a production method using emulsification and dispersion described later, a polyurethane resin aqueous dispersion can be obtained.

In the polyurethane resin aqueous dispersion, examples of the aqueous solvent include, but are not particularly limited to, water, lower alcohol compounds having 1 to 3 carbon atoms, and mixed solvents thereof. Of these, water is preferred.

In the polyurethane resin aqueous dispersion, the proportion of the polyurethane resin is not particularly limited. For example, the polyurethane resin can be contained in an amount of 5 to 80 parts by mass and is preferably contained in an amount of 15 to 60 parts by mass relative to 100 parts by mass of the aqueous solvent.

In the polyurethane resin aqueous dispersion, the particle size of the polyurethane resin is not particularly limited and may be, for example, a range similar to that of a particle size of a polyurethane resin in a known polyurethane resin aqueous dispersion for a coating agent. For example, the volume average particle size D50 of the polyurethane resin is 0.1 to 500 nm, preferably 0.5 to 300 nm, more preferably 1 to 100 nm.

The polyurethane resin aqueous dispersion can contain a component other than the polyurethane resin and water, and for example, ingredients used in producing the polyurethane resin aqueous dispersion may remain. Such ingredients are, for example, surfactants, unreacted monomers, unreacted chain extenders, byproducts, and catalysts. The catalysts are, for example, metal catalysts and amine-based catalysts. Examples of metal catalysts include tin catalysts such as dibutyltin dilaurate, dioctyltin dilaurate, and dibutyltin dioctoate; lead catalysts such as lead octylate, lead octenoate, and lead naphthenate; and bismuth catalysts such as bismuth octylate and bismuth neodecanoate. Examples of amine-based catalysts include tertiary amine compounds such as triethylenediamine.

The polyurethane resin aqueous dispersion may contain a film-forming aid. Examples of film-forming aids include various known film-forming aids. Examples thereof include butyl cellosolve, butyl carbitol, N-methyl-2-pyrrolidone, N,N-dimethylformamide, phenols, and glycol diacetates.

A coating can be formed using the polyurethane resin aqueous dispersion. The method for forming such a coating is not particularly limited, and a coating can be formed by, for example, a known method. For example, a surface of a substrate such as a film is coated with the polyurethane resin aqueous dispersion, and the aqueous solvent is volatilized by drying or the like to thereby form a dried product of the polyurethane resin aqueous dispersion. This dried product can be used as a coating. The thickness of the coating is not particularly limited and can be adjusted as appropriate depending on the use and purpose.

Since the polyurethane resin aqueous dispersion contains the polyurethane resin composition according to the present invention, it is possible to form a coating that has high mechanical strength and solvent resistance and that also has good scratch resistance and blocking resistance.

Accordingly, the polyurethane resin aqueous dispersion can be suitably used as various coating agents for forming coatings and is particularly suitable as a coating agent for a film. The coating agent for a film can contain other components as long as the coating agent contains the polyurethane resin aqueous dispersion. Alternatively, the polyurethane resin aqueous dispersion alone can be used as a coating agent for a film.

The coating agent for a film is applicable to various films. In particular, since the coating agent for a film contains the polyurethane resin aqueous dispersion, a coating that also has good scratch resistance and blocking resistance can be formed. From this viewpoint, the coating agent for a film is preferably a coating agent for a decorative film.

The type of decorative film to which the coating agent for a film is applicable is not particularly limited, and, for example, the coating agent is widely applicable to known decorative films.

Various additives that are generally used can be used for the coating agent for a film as long as the effects of the present invention are not impaired. Examples of such additives include weather-resistant agents, antibacterial agents, fungicides, fillers, rust inhibitors, pigments, dyes, film-forming aids, inorganic crosslinking agents, organic crosslinking agents (e.g., blocked isocyanate crosslinking agents, epoxy crosslinking agents, carbodiimide crosslinking agents, oxazoline crosslinking agents, and melamine crosslinking agents), silane coupling agents, antiblocking agents, viscosity modifiers, leveling agents, antifoaming agents, dispersion stabilizers, antioxidants, ultraviolet absorbents, plasticizers, lubricants, and antistatic agents.

### 2. Method for producing polyurethane resin

The method for producing the polyurethane resin is not particularly limited, and, for example, a known production method can be widely employed. In particular, the polyurethane resin is preferably produced by a production method using emulsification and dispersion.

In the production method using emulsification and dispersion, for example, the polyol (A) and the polyisocyanate are subjected to a mixing process to prepare a urethane prepolymer, and this urethane prepolymer is emulsified and dispersed. Thus, a polyurethane resin, in particular, a polyurethane resin aqueous dispersion can be obtained. The mixing process can be conducted in a solvent as needed. The solvent preferably has a property of being inactive against isocyanate groups and capable of dissolving the urethane prepolymer generated. From this viewpoint, examples of such a solvent include dioxane, methyl ethyl ketone, dimethylformamide, tetrahydrofuran, N-methyl-2-pyrrolidone, acetone, toluene, dioxane, ethyl acetate, butyl acetate, and propylene glycol monomethyl ether acetate. Such a solvent used in the reaction is preferably removed in the end.

The temperature of the mixing process is not particularly limited and can be, for example, 30°C to 130°C. The time of the mixing process can be appropriately set depending on the temperature and is, for example, 0.5 hours to 10 hours. The mixing process causes the reaction between the polyol (A) and the polyisocyanate to proceed, thus generating a urethane prepolymer. When the mixing process is performed using a solvent, a urethane prepolymer solution is obtained. After the generation of the urethane prepolymer and before emulsification and dispersion, neutralization of anionic hydrophilic groups of the component (b) can be conducted by a known method as necessary.

This neutralization can be conducted using an appropriate neutralizing agent. Examples of neutralizing agents include nonvolatile bases such as sodium hydroxide and potassium hydroxide; tertiary amines such as trimethylamine, triethylamine, dimethylethanolamine, methyldiethanolamine, and triethanolamine; and volatile bases such as ammonia.

In the above mixing process, the amounts of polyol (A) and polyisocyanate used are not particularly limited, and the amounts used can be adjusted as appropriate according to the composition of the target polyurethane resin.

The method for emulsifying and dispersing the urethane prepolymer obtained in the mixing process is not particularly limited, and a known method can be widely employed. For example, the urethane prepolymer can be emulsified and dispersed by mixing a solution of the urethane prepolymer and an aqueous solvent and applying shear with an emulsification disperser such as a homogenizer. The aqueous solvent may contain the above neutralizing agent as needed.

At the same time as or after the emulsification and dispersion, chain extension can be performed by adding a chain extender or a crosslinking agent. The addition of the chain extender causes the isocyanate groups in an emulsified micelle and the chain extender to undergo interfacial polymerization reaction to form urea bonds. Thus, the crosslinking density in the emulsified micelle is improved to form a three-dimensional crosslinked structure. A crosslinking agent also forms a three-dimensional crosslinked structure. Even if a chain extender is not used, the urethane prepolymer is emulsified and dispersed in water, and chain extension can be thereby caused by water molecules present in the system. The chain extender may be the polyamine described above.

When a chain extender (polyamine) is used, the amount used is not particularly limited. For example, the amount of chain extender used can be adjusted such that the equivalent ratio of isocyanate groups in the urethane prepolymer to the chain extender is 1:0.5 to 1:0.9.

In the emulsification and dispersion, various surfactants can be used as necessary. Examples of surfactants include nonionic surfactants, anionic surfactants, and cationic surfactants. These surfactants may be used alone or in combination of two or more thereof.

A polyurethane resin aqueous dispersion can be obtained by the method using emulsification and dispersion. The resulting polyurethane resin aqueous dispersion can be used as the coating agent for a film.

### EXAMPLES

The present invention will be more specifically described below with reference to Examples. The present invention is not limited to embodiments of these Examples.

### (Ingredients used)

Appropriate ingredients were selected from ingredients below, and polyurethane resin aqueous dispersions were prepared.

### <Polyol (A)>

### Component (a)

· a-1: BENEBiOL (registered trademark) NL1010DB (manufactured by Mitsubishi Chemical Corporation) (the number of functional groups: 2, number-average molecular weight: 1,000, the proportion of a 1,10-decanediol unit relative to the total amount of 1,10-decanediol and other glycols is about 10% by mole)
· a-2: BENEBiOL (registered trademark) NL1030DB (manufactured by Mitsubishi Chemical Corporation) (the number of functional groups: 2, number-average molecular weight: 1,000, the proportion of a 1,10-decanediol unit relative to the total amount of 1,10-decanediol and other glycols is about 30% by mole)
· a-3: BENEBiOL (registered trademark) NL1000D (manufactured by Mitsubishi Chemical Corporation) (the number of functional groups: 2, number-average molecular weight: 1,000, containing a 1,10-decanediol unit in an amount of 100% by mole)
· a-4: BENEBiOL (registered trademark) NL2030DB (manufactured by Mitsubishi Chemical Corporation) (the number of functional groups: 2, number-average molecular weight: 2,000)

### Component (b)

· b-1: Dimethylolpropionic acid (Bis-MPA (registered trademark), manufactured by Perstorp) (the number of functional groups: 2, number-average molecular weight: 134.13)

### Component (c) (Glycol compound)

· c-1: Polytetramethylene ether glycol ("PTMG1000" (registered trademark) manufactured by Mitsubishi Chemical Corporation) (the number of functional groups: 2, number-average molecular weight: 1,000)
· c-2: Polytetramethylene ether glycol ("PTMG2000" (registered trademark) manufactured by Mitsubishi Chemical Corporation) (the number of functional groups: 2, number-average molecular weight: 2,000)
· c-3: Polytetramethylene ether glycol ("PTMG3000" (registered trademark) manufactured by Mitsubishi Chemical Corporation) (the number of functional groups: 2, number-average molecular weight: 3,000)

### Component (d)

· d-1: "EXCENOL 430" manufactured by AGC Inc. (the number of functional groups: 3, number-average molecular weight: 420)
· d-2: "EXCENOL 1030" manufactured by AGC Inc. (the number of functional groups: 3, number-average molecular weight: 1,000)
· d-3: "EXCENOL 3030" manufactured by AGC Inc. (the number of functional groups: 3, number-average molecular weight: 3,000)
· d-4: Trimethylolpropane (the number of functional groups: 3, number-average molecular weight: 134.17)

### <Polyisocyanate>

· 4,4'-Dicyclohexylmethane diisocyanate (H12MDI)
· Isophorone diisocyanate (IPDI)

### <Polyamine (Chain extender)>

· e-1: Isophoronediamine
· e-2: Diethylenetriamine

### <Carbodiimide crosslinking agent (Carbodiimide compound)>

· f-1: CARBODILITE crosslinking agent for water-based resins "V-02-L2", manufactured by Nisshinbo Chemical Inc.

Polyurethane resin aqueous dispersions were prepared by procedures described below in accordance with formulations shown in Table 1.

### (Example 1)

A polyol (A) consisting only of 39.2 parts by mass of a-2 serving as the component (a), 5 parts by mass of b-1 serving as the component (b), 24.3 parts by mass of c-1 serving as the component (c), and 1 part by mass of d-1 serving as the component (d) (69.5 parts by mass in total, in which the component (c) accounts for 35% by mass, and the component (d) accounts for 1.4% by mass), a polyisocyanate consisting of 30.5 parts by mass of 4,4'-dicyclohexylmethane diisocyanate (H12MDI), and 100 parts by mass of methyl ethyl ketone were mixed and caused to react at 70°C to 75°C for 120 minutes to obtain a urethane prepolymer solution. At this time, the free isocyanate group content (in terms of solid content) was 1.3% by mass.

The urethane prepolymer solution was cooled to 35°C, neutralized by adding 3.7 parts by mass of triethylamine as a neutralizing agent, and then emulsified and dispersed using a homogenizer while water was gradually added. To the emulsified dispersion obtained in this manner, an aqueous solution in which 1.0 part by mass of e-2 was dissolved as a polyamine (chain extender) was added. After the addition, disappearance of free isocyanate groups was confirmed, and methyl ethyl ketone was then distilled off to obtain a polyurethane resin aqueous dispersion containing a polyurethane resin having an acid value of 21 mgKOH/g, as shown in Table 1.

### (Examples 2 to 14)

Aqueous dispersions containing a polyurethane resin were obtained in the same manner as in Example 1 except that the types and blending amounts of ingredients used were changed as shown in Table 1.

### (Comparative Examples 1 to 5)

Aqueous dispersions containing a polyurethane resin were obtained in the same manner as in Example 1 except that the types and blending amounts of ingredients used were changed as shown in Table 1.

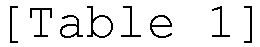

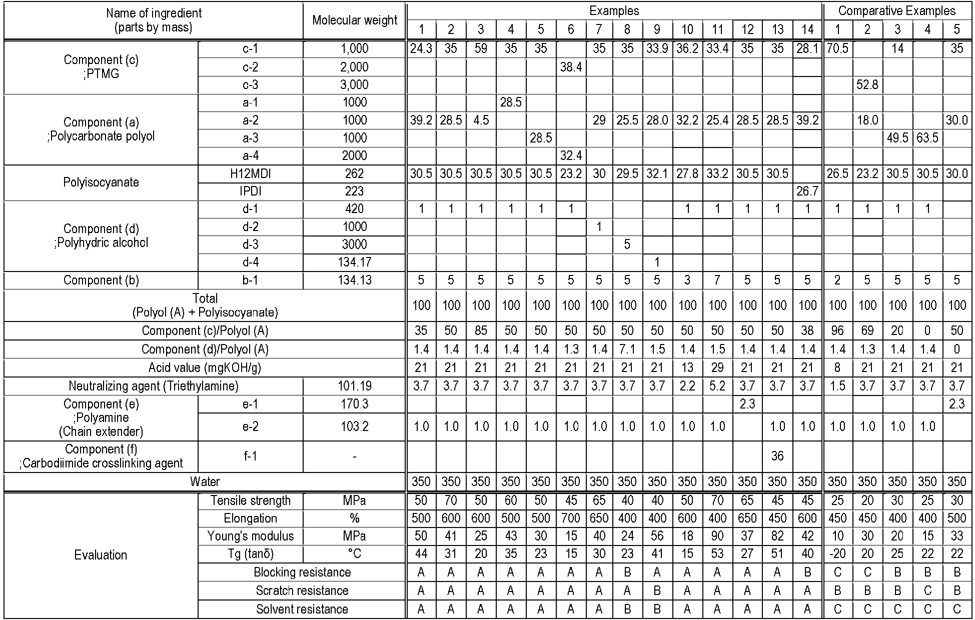

### (Evaluation methods)

### <Tensile strength, elongation, and Young's modulus>

An aqueous dispersion containing a polyurethane resin was put in a Teflon (registered trademark)-coated petri dish such that a dry film thickness was about 200 µm and dried at 80°C for six hours to thereby prepare a coating A. The coating A was cut into a size of a dumbbell specimen (No. 3) to prepare an evaluation sample. The tensile strength (MPa), the elongation (%), and the Young's modulus (MPa) were measured at a tensile rate of 100 mm/min in accordance with JIS K-6301.

### <Tg (tanδ)>

A specimen with a size of 5 mm × 2 cm was cut out of the coating A, and tanδ of dynamic viscoelasticity was measured with a "Rheogel E-4000" manufactured by UBM Co., Ltd. in accordance with JIS K-7244-4 to measure Tg (tanδ) of the polyurethane resin.

### <Blocking resistance>

An aqueous dispersion containing a polyurethane resin was applied onto a polyethylene terephthalate substrate (PET manufactured by Toray Industries, Inc., model number: #100 T60) so as to have a film thickness of about 20 µm and dried at 80°C for six hours to thereby prepare a coating layer. Two coating layers were each prepared as described above, the coating layers were laminated with each other at a load of 500 g, and the state was visually observed when the coating layers were peeled off. Blocking resistance of the coating layers (coatings) formed from the aqueous dispersion was evaluated on the basis of the following criteria.
A: The coated surfaces did not adhere to each other, and blocking resistance was good.
B: The coated surfaces merely adhered to each other in 50% or more of the area thereof.
C: The whole coating layers adhered to each other, and blocking resistance was poor.

### <Scratch resistance>

An aqueous dispersion containing a polyurethane resin was applied onto a polyethylene terephthalate substrate (PET manufactured by Toray Industries, Inc., model number: #100 T60) so as to have a film thickness of about 20 µm and dried at 80°C for six hours to thereby prepare a coating layer. The surface of this coating layer was rubbed back and forth five times with a brass wire brush (No. 9, manufactured by Fujiwara Industrial Co., Ltd.) at a load of 500 g in an environment of 23°C, and the degree of scratches on the hardened film was visually observed. Scratch resistance of the coating layer (coating) formed from the aqueous dispersion was evaluated on the basis of the following criteria.
A: The scratches were healed within 10 seconds, and scratch resistance was good.
B: The scratches were healed in a period of more than 10 seconds and 10 minutes or less.
C: The scratches were not healed even after one hour passed, and scratch resistance was poor.

### <Solvent resistance>

An aqueous dispersion containing a polyurethane resin was applied onto a polyethylene terephthalate substrate (PET manufactured by Toray Industries, Inc., model number: #100 T60) so as to have a film thickness of about 20 µm and dried at 80°C for six hours to thereby prepare a coating layer. The surface of this coating layer was subjected to a rubbing test 10 times at a load of 500 g using felt impregnated with a mixed solvent of ethyl acetate/toluene. Subsequently, the state of the coated surface was visually observed, and solvent resistance of the coating layer (coating) formed from the aqueous dispersion was evaluated on the basis of the following criteria.
A: No change was observed on the coated surface, and solvent resistance was good.
B: Erosion was merely observed on the coated surface.
C: The coating layer was peeled off, and solvent resistance was poor.

Table 1 shows blending conditions used in the production of the polyurethane resin aqueous dispersions in Examples and Comparative Examples and evaluation results of the polyurethane resin aqueous dispersions. Note that in Table 1, a blank means that the ingredient was not used. The amounts of ingredients used in Examples and Comparative Examples are expressed in units of parts by mass. In Table 1, "Total (Polyol (A) + Polyisocyanate)" means the total mass (parts by mass) of the component (a), the component (b), the component (c), the component (d), and the polyisocyanate used in the formulations.

The results in Table 1 showed that the coatings formed using the polyurethane resin aqueous dispersions obtained in Examples had high mechanical strength and solvent resistance and also had good scratch resistance and blocking resistance. This demonstrated that the polyurethane resin aqueous dispersions obtained in Examples were suitable as coating agents for films.

## Claims

1. A polyurethane resin composition, the composition comprising a polyurethane resin,
wherein the polyurethane resin has a structural unit derived from a polyol, a structural unit derived from a polyisocyanate, and a structural unit derived from a polyamine,
the polyol includes:
a polycarbonate polyol having a structural unit derived from 1,10-decanediol,
a polyol compound having an anionic hydrophilic group,
a glycol compound represented by HO-(R¹-O)ₙ-H (where R¹ represents an alkylene group having 3 to 5 carbon atoms, and n represents a number of 1 or more), and
a polyhydric alcohol having three or more hydroxy groups,
the glycol compound has a number-average molecular weight of 500 to 2,500,
the polyhydric alcohol is included in an amount of 10% by mass or less relative to a total mass of the polyol, and
the glycol compound is included in an amount of 30% by mass or more and 90% by mass or less relative to the total mass of the polyol.

2. The polyurethane resin composition according to Claim 1, wherein the polyurethane resin has an acid value of 5 to 35 mgKOH/g.

3. The polyurethane resin composition according to Claim 1 or 2, wherein the polyhydric alcohol has a molecular weight of 420 to 2,000.

4. A polyurethane resin aqueous dispersion comprising the polyurethane resin composition according to any one of Claims 1 to 3.

5. A coating agent for a film, the coating agent comprising the polyurethane resin aqueous dispersion according to Claim 4.

6. The coating agent according to Claim 5, being a coating agent for a decorative film.

7. A coating comprising a dried product of the polyurethane resin aqueous dispersion according to Claim 4.
